# FASCICULE DE BREVET EUROPEEN

(11) **EP 3 995 354 B1**
(45) Date de publication et mention de la délivrance du brevet: **13.09.2023**
(21) Numéro de dépôt: 21206469.5
(22) Date de dépôt: 04.11.2021
(51) Int. Cl.: B60N 2/00, G01L 1/20, H01H 13/785

(54) **PIÈCE DE REVÊTEMENT POUR VÉHICULE AUTOMOBILE COMPRENANT UN CAPTEUR DE PRESSION**
VERKLEIDUNGSTEIL FÜR KRAFTFAHRZEUG, DAS EINEN DRUCKSENSOR UMFASST
COVERING PART FOR MOTOR VEHICLE INCLUDING A PRESSURE SENSOR

(30) Priorité: 04.11.2020 FR 2011306
(43) Date de publication de la demande: 11.05.2022
(73) Titulaire: Adler Pelzer France Grand-Est, 08210 Mouzon (FR)
(72) Inventeur: JEUNEHOMME, Franck, Luc, 08800 MONTHERME (FR); CHAUVEAU, Benoît, Marc, Daniel, 95630 MERIEL (FR)
(74) Mandataire: Lavoix

(56) Documents cités:
- WO-A1-2007/107522
- WO-A2-2007/047762
- US-A- 5 060 527

## Description

La présente invention concerne une pièce de revêtement pour véhicule automobile, plus particulièrement son habitacle.

L'invention concerne également un procédé de détection d'une pression exercée sur une telle pièce de revêtement.

Actuellement, il est connu d'intercaler un détecteur de pression entre la couche d'envers et la couche d'aspect, typiquement une moquette, d'une pièce de revêtement pour véhicule automobile, afin de détecter la présence d'un objet reposant sur la pièce de revêtement, par exemple dans une zone d'intérêt telle que celle où reposent les pieds du ou des passagers du véhicule automobile.

Le détecteur de pression est constitué de deux électrodes situées sur deux côtés opposés de la couche de matériau selon la direction d'épaisseur. Les électrodes sont en général formées respectivement par des réseaux de fils conducteurs couvrant les deux surfaces opposées de la couche de matériau.

Lorsqu'une pression est exercée sur la couche d'aspect dans la direction d'épaisseur, la couche de matériau se déforme dans cette direction, et la résistance électrique entre les deux électrodes diminue. En mesurant cette baisse de la résistance électrique, il est possible de détecter la pression exercée.

La pièce de revêtement comprend donc la couche d'envers, un substrat portant le réseau de fils de la première électrode, la couche de matériau déformable, un substrat portant le réseau de fils de la deuxième électrode, et la couche d'aspect. Une telle pièce de revêtement donne satisfaction du point de vue de la détection de la pression exercée, mais est relativement complexe à fabriquer, ce qui impacte négativement son coût de fabrication. WO 2007/047762 A2 montre un capteur d'occupation avec deux électrodes s'étendant contre la couche de matériau, la couche de matériau formant une résistance électrique en contact électrique avec les deux électrodes la résistance électrique étant variable en fonction d'une déformation de la couche de matériau consécutive à une pression exercée sur la couche d'aspect dans la direction d'épaisseur par un objet ou un utilisateur.

Un but de l'invention est de réduire le coût de fabrication d'une telle pièce de revêtement, toute choses égale par ailleurs.

À cet effet, l'invention a pour objet une pièce de revêtement selon la revendication 1.

Selon des modes de réalisation particuliers, la pièce de revêtement comprend l'une ou plusieurs des caractéristiques correspondant aux revendications 2 à 8, prise(s) isolément ou selon toutes les combinaisons techniquement possibles.

L'invention a aussi pour objet un procédé selon la revendication 9.

L'invention sera mieux comprise à la lecture de la description qui va suivre, donnée uniquement à titre d'exemple et faite en se référant aux dessins annexés, sur lesquels :
- la figure 1 est une vue schématique, en perspective, d'une pièce de revêtement selon l'invention,
- la figure 2 est une vue schématique, en perspective, d'un détecteur de pression selon une variante de l'invention,
- la figure 3 est une vue schématique, selon la direction d'épaisseur, des deux électrodes représentées sur les figures 1 et 2, et
- la figure 4 est une vue schématique, en coupe, des deux électrodes et de la couche de matériau représentés sur les figures 1 et 2.

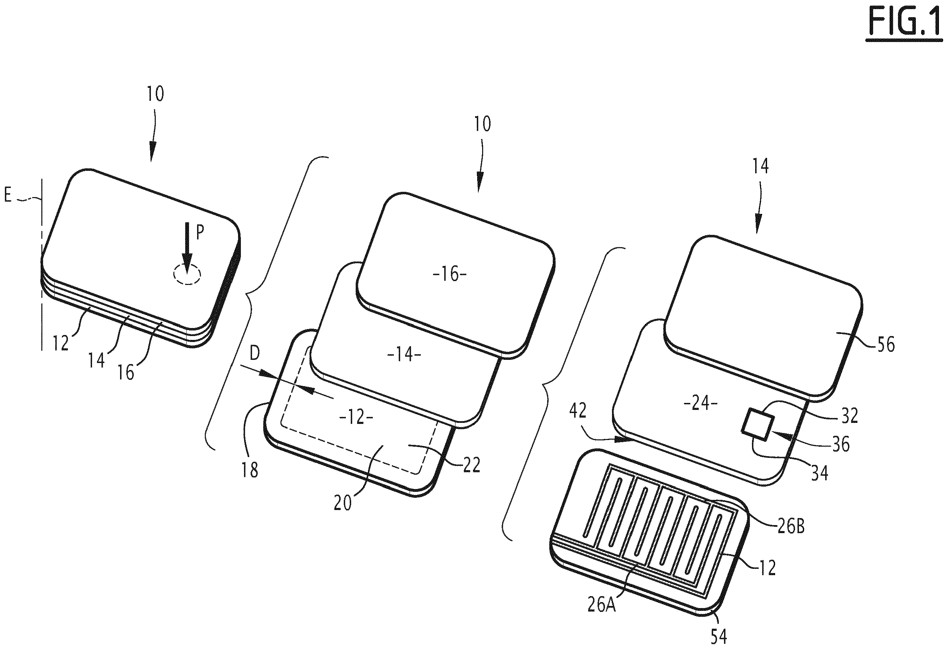

En référence à la figure 1, on décrit une pièce de revêtement 10 selon l'invention.

La pièce de revêtement 10 est par exemple destinée à couvrir au moins une portion de paroi d'un habitacle (non représenté) d'un véhicule automobile. Par exemple, la pièce de revêtement 10 présente l'aspect d'un tapis ou d'une moquette sur lequel les pieds d'un passager (non représenté) du véhicule automobile sont destinés à reposer.

La pièce de revêtement 10 comprend une couche d'envers 12, un capteur de pression 14 et une couche d'aspect 16 empilés successivement selon une direction d'épaisseur E de la pièce de revêtement. Selon un mode particulier, représenté sur la figure 1, la pièce de revêtement 10 est constituée de ces trois éléments.

Dans l'exemple représenté, la pièce de revêtement 10, vue dans la direction d'épaisseur E et à plat, présente une forme de rectangle aux coins arrondis.

Selon des variantes non représentées, la pièce de revêtement 10 présente d'autres formes, notamment des formes complexes, car la couche d'envers 12 est avantageusement adaptée pour être thermoformée, la pièce de revêtement 10 étant ensuite fixée sur une paroi non plane de l'habitacle.

La couche d'envers 12 est fixée sur la paroi de l'habitacle. La couche d'envers 12 constitue avantageusement une « masse lourde », connue en elle-même pour absorber les ondes sonores et contribuer à l'isolation phonique de l'habitacle.

La couche d'envers 12 comprend par exemple du latex, du poly(chlorure de vinyle) (PVC), du caoutchouc, ou du polyuréthane (PU), avantageusement dans une quantité comprise entre 100 et 300 g/m², par exemple d'environ 220 g/m².

La couche d'aspect 16 est destinée à être vue ou touchée par le passager. La couche d'aspect 16 forme un tapis ou une moquette. La couche d'aspect 16 est par exemple réalisée par tuftage (en anglais *Tuft*) ou aiguilletage (avantageusement de type Dilour), dans une gamme de 250 à 1200 g/m², notamment en *Tuft* de 600 g/m², ou comprenant une polyoléfine thermoplastique (TPO), du polyuréthane thermoplastique (TPU), du poly(chlorure de vinyle) (PVC), du polyéthylène (PE) ou du caoutchouc dans une gamme de 250 à 2000 g/m², notamment du polyéthylène par exemple à environ 1500 g/m².

Le capteur de pression 14 est pris en sandwich entre la couche d'aspect 16 et la couche d'envers 12. Le capteur de pression 14 présente par exemple la même extension, à plat et perpendiculairement à la direction d'épaisseur E, que la couche d'aspect 16 et la couche d'envers 12.

Selon des modes de réalisation particuliers (non représentés), le capteur de pression 14 présente une extension moindre que la couche d'aspect 16 et la couche d'envers 12.

Selon un mode préféré (non représenté), le capteur de pression 14 arrête à une distance prédéterminée D, par exemple environ 1 cm, d'un bord périphérique 18 de la couche d'envers 12.

Selon un mode particulier (non représenté), le capteur de pression 14 est au moins partiellement logé entre la surface supérieure 22 de la couche d'envers 12 et la couche d'aspect 16. Par « supérieur », on entend ici « du côté de la couche d'aspect » selon la direction d'épaisseur E.

Le capteur de pression 14 comprend une couche de matériau 24, et au moins deux électrodes 26A, 26B s'étendant contre la couche de matériau 24.

La couche de matériau 24 est en contact électrique avec les deux électrodes 26A, 26B et forme une résistance électrique entre les deux électrodes 26A, 26B. La couche de matériau 24 est adaptée pour que la résistance électrique soit variable en fonction d'une déformation 30 de la couche de matériau 24 consécutive à une pression P (figures 1, 3 et 4) exercée sur la couche d'aspect 16 dans la direction d'épaisseur E par un objet (non représenté) ou le passager.

La couche de matériau 24 présente une résistivité au repos, en l'absence de la pression P, avantageusement comprise entre 40000 et 60000 ohm/carré, par exemple d'environ 50000 ohm/carré. La couche de matériau 24 est adaptée pour présenter localement une résistivité inférieure à la résistivité au repos là où la pression P est exercée.

L'ohm/carré (en anglais *ohm*/*sq*) est une unité de résistivité utilisée pour exprimer la résistivité de couches minces dans le sens transversal, perpendiculairement à la direction d'épaisseur E. C'est la résistance existant entre deux côtés opposés 32, 34 d'un carré 36 (plus exactement d'une portion carrée) de la couche considérée. Cette résistance est indépendante des dimensions du carré lorsque celui-ci est suffisamment petit (et donc loin des bords de la surface 42), car la distance entre les côtés 32, 34 et leur longueur sont égales, d'où l'unité ohm/carré. Il s'agit en fait de la résistance, en ohm, pour n'importe quel carré suffisamment petit pris dans la surface considérée. La résistivité est par exemple mesurée à 300K.

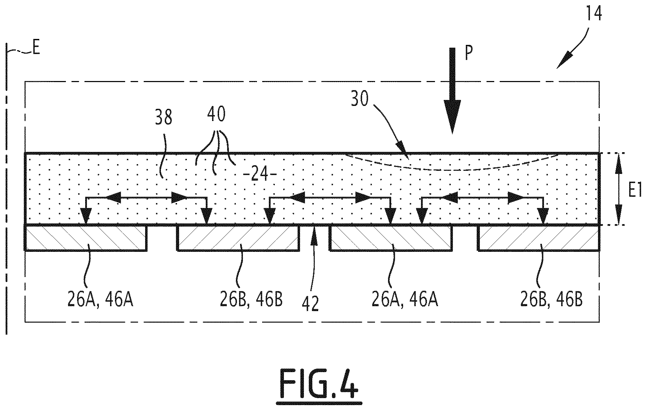

La couche de matériau 24 présente une épaisseur E1 (figure 4) comprise entre 0,05 et 0,50 mm, de préférence entre 0,10 et 0,30 mm. La couche de matériau 24 comprend par un matériau polymère 38, tel que le polyéthylène, et des particules de carbone 40 (symbolisées sur la figure 4) dispersées dans le matériau polymère 38.

Les particules de carbone 40 ont avantageusement un diamètre moyen compris entre 0,20 et 5,0 µm, par exemple d'environ 0,5 µm. Les particules de carbone 40 représentent avantageusement une fraction massique de la couche de matériau 24 comprise entre 10% et 30%, par exemple environ 20%.

Les deux électrodes 26A, 26B sont situées contre une même surface 42 de la couche de matériau 24 située d'un même côté de la couche matériau selon la direction d'épaisseur E. Chacune des deux électrodes 26A, 26B est répartie sur la surface 42 sans toucher l'autre des deux électrodes afin d'éviter tout court-circuit.

Par « répartie », on entend par exemple que les deux électrodes 26A, 26B sont configurées pour que tout point M de la surface 42 à couvrir se situe à une distance DA de l'électrode 26A et à une distance DB de l'électrode 26B, les distances DA et DB étant inférieures à une distance limite DL. La distance limite DL est avantageusement inférieure à 50 mm, de préférence inférieure à 25 mm, et vaut par exemple 10 mm. Dit autrement, tout point M de la surface 42 se situe à moins de 50 mm, de préférence à moins de 25 mm, de chacune des deux électrodes 26A, 26B.

Avantageusement, la surface 42 couverte par les deux électrodes 26A et 26B s'étend sur tout un côté de la couche de matériau 24.

Par exemple, chacune des deux électrodes 26A, 26B comprend respectivement un collecteur 44A, 44B s'étendant dans une première direction transversale T1 perpendiculaire à la direction d'épaisseur E, et une pluralité d'éléments filiformes 46A, 46B connectés en parallèle les uns des autres au collecteur 44A, 44B et s'étendant selon une deuxième direction transversale T2 perpendiculaire à la direction d'épaisseur E et par exemple perpendiculaire à la première direction transversale T1. Les éléments filiformes 46A de l'une des deux électrodes 26A, 26B alternent avec les éléments filiformes 46B de l'autre des deux électrodes sur la surface 42 dans la première direction transversale T1.

Les deux électrodes 26A, 26B sont par exemple reliées par des fils 48A, 48B à un organe 50 adapté pour fournir une information représentative de la résistance électrique entre les deux électrodes 26A, 26B. L'organe 50 est par exemple un ohmmètre.

Selon un mode de réalisation particulier, chacune des deux électrodes 26A, 26B comprend une peinture 52 électriquement conductrice ou une encre électriquement conductrice. Chacune des deux électrodes 26A, 26B est avantageusement réalisée en déposant la peinture 52 ou l'encre sur une surface réceptrice. Par « électriquement conductrice », on entend par exemple que la peinture ou l'encre a une résistivité électrique inférieure à 3.10⁻³ ohm.m à 300K.

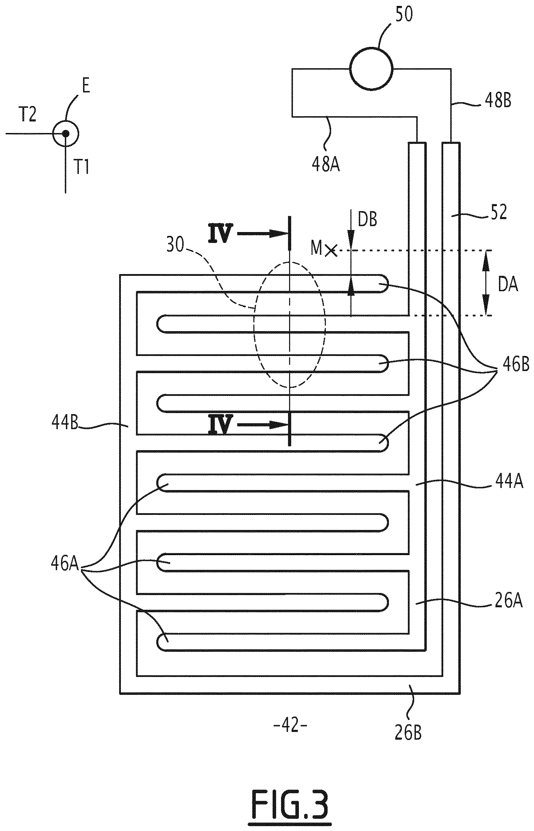

Le dépôt se fait avantageusement en imprimant un motif (figure 3) correspondant aux deux électrodes 26A, 26B à l'aide d'une imprimante (non représentée) selon une technologie connue en elle-même.

Dans l'exemple de la figure 1, la peinture 52 est déposée sur un film 54, par exemple en matière plastique, avantageusement du polyéthylène. Le film 54 est intercalé entre la couche d'envers 12 et la couche de matériau 24. Un film 56, par exemple analogue au support 54, est avantageusement disposée entre la couche de matériau 24 et la couche d'aspect 16.

Les films 54, 56 sont avantageusement adaptés pour isoler électriquement la couche de matériau 24 d'une part de la couche d'envers 12 et d'autre part de la couche d'aspect 16, si ces couches ne sont pas assez isolantes en elles-mêmes.

Selon une variante non représentée, le film 54 est intercalé entre la couche de matériau 24 et la couche d'aspect 16, et le film 56, s'il est présent, est intercalé entre la couche de matériau 24 et la couche d'envers 12.

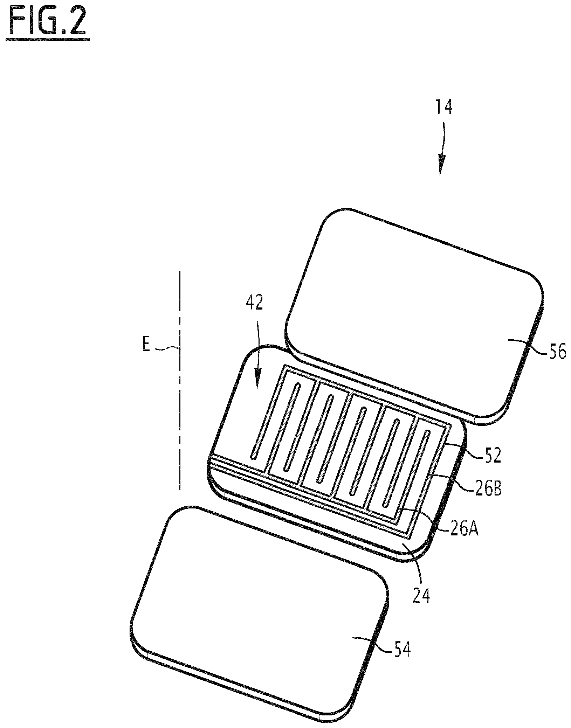

Selon une variante représentée sur la figure 2, la peinture 52 est déposée directement sur la couche de matériau 24, du côté de la couche d'aspect 16 selon la direction d'épaisseur E. Dans ce cas le film 54 et le film 56 sont éventuellement omis.

Selon une variante non représentée, la peinture 52 est déposée directement sur la couche d'envers 12. Dans ce cas le film 54, et éventuellement la couche 56, sont omis. Le dépôt de la peinture 52 est avantageusement réalisé après un thermoformage de la couche d'envers 12.

La peinture 52 est par exemple fabriquée à partir de laque acrylique et de poudre de carbone, comme la peinture conductrice 838AR de MG CHEMICALS, dite « *Total Ground Carbon* » (en français : « au carbone terrestre total »).

Selon d'autres modes de réalisation, non représentés spécifiquement, les deux électrodes 26A, 26B sont réalisées, non pas à l'aide d'une peinture ou d'une encre, mais à l'aide de fils en aluminium, en argent ou en cuivre, avec une section avantageusement comprise entre 0,10 et 0,30 mm², par exemple d'environ 0,20 mm². Ces fils sont structurellement analogues à la peinture 52 représentée sur la figure 3.

Le fonctionnement de la pièce de revêtement 10 découle de sa structure et va maintenant être brièvement décrit. Au passage, on décrit aussi un procédé de détection de la pression P selon l'invention.

Au repos, la couche de matériau 24 a une résistivité plutôt élevée, par exemple d'environ 50000 ohm/carré. L'organe 50 mesure cette résistivité, qui signifie qu'aucune pression n'est appliquée sur la couche d'aspect 16. En variante, l'organe 50 est moins sensible, et ne détecte « rien » tant qu'une pression P suffisante n'est pas appliquée.

Puis la pression P (figures 1 et 4) est appliquée selon la direction d'épaisseur E, par exemple par le pied d'un utilisateur, ou par un objet tombé sur la pièce de revêtement 10. La couche de matériau 24 subit la déformation 30 (figure 4) dans la direction d'épaisseur E, qui réduit localement sa résistivité, et diminue la résistance électrique formée par la couche de matériau 24 entre les deux électrodes 26A, 26B. Sur la figure 4, la conduction électrique est symbolisée par des flèches reliant les deux électrodes 26A, 26B.

Dans l'exemple, cette baisse de la résistivité est due à un rapprochement relatif entre les particules de carbone 40 provoqué par la déformation 30.

L'organe 50 mesure alors une résistance électrique différente entre les deux électrodes, ce qui permet d'obtenir une variation de la résistance électrique et de détecter l'application pression P.

Grâce aux caractéristiques décrites ci-dessus, notamment le fait que les deux électrodes se situent du même côté de la couche de matériau, chacune des électrodes 26A, 26B comprend environ deux fois moins de matériau conducteur, pour une même surface 42 couverte par les deux électrodes. En effet, dans l'état de la technique, une variation de la résistance électrique est mesurée dans la direction d'épaisseur E, c'est pourquoi les deux électrodes doivent couvrir séparément deux surfaces correspondant aux deux côtés de la couche de matériau 24. Au contraire, dans l'invention, les deux électrodes 26A, 26B couvrent ensemble une même surface située d'un seul côté de la couche de matériau 24. La surface couverte est donc deux fois moindre. Le coût de fabrication est donc réduit.

Grâce à la caractéristique optionnelle selon laquelle les deux électrodes sont au moins en partie formées par dépôt d'une peinture ou d'une encre, les deux électrodes sont faciles à fabriquer, et peuvent être imprimée selon un motif réparti sur la surface 42 de détection.

## Revendications

1. Pièce de revêtement (10) pour véhicule automobile comprenant une couche d'envers (12), un capteur de pression (14) et une couche d'aspect (16) empilés successivement selon une direction d'épaisseur (E) de la pièce de revêtement (10), le capteur de pression (14) comprenant une couche de matériau (24), et au moins deux électrodes (26A, 26B) s'étendant contre la couche de matériau (24), la couche de matériau (24) formant une résistance électrique en contact électrique avec les deux électrodes (26A, 26B), la résistance électrique étant variable en fonction d'une déformation (30) de la couche de matériau (24) consécutive à une pression (P) exercée sur la couche d'aspect (16) dans la direction d'épaisseur (E) par un objet ou un utilisateur,
- la couche de matériau (24) présentant une épaisseur (E1) comprise entre 0,05 et 0,5 mm,
- les deux électrodes (26A, 26B) étant situées contre une même surface (42) de la couche de matériau (24) située d'un même côté de la couche matériau selon la direction d'épaisseur (E), et
- chacune des deux électrodes (26A, 26B) étant répartie sur cette surface (42) sans toucher l'autre des deux électrodes (26A, 26B).

2. Pièce de revêtement (10) selon la revendication 1, dans laquelle chacune des deux électrodes (26A, 26B) comprend un collecteur (44A, 44B) et une pluralité d'éléments filiformes (46A, 46B) connectés en parallèle les uns des autres au collecteur (44A, 44B), les éléments filiformes (46A, 46B) de l'une des deux électrodes (26A, 26B) alternant avec les éléments filiformes (46A, 46B) de l'autre des deux électrodes (26A, 26B) sur ladite surface (42).

3. Pièce de revêtement (10) selon la revendication 1 ou 2, dans laquelle chacune des deux électrodes (26A, 26B) comprend des fils en aluminium, en argent ou en cuivre.

4. Pièce de revêtement (10) selon la revendication 1 ou 2, dans laquelle chacune des deux électrodes (26A, 26B) comprend une peinture (52) électriquement conductrice.

5. Pièce de revêtement (10) selon la revendication 4, dans laquelle la peinture (52) de chacune des deux électrodes (26A, 26B) s'étend sur la couche de matériau (24), la couche d'envers (12), ou sur un film (54) en matière plastique de la pièce de revêtement (10), le film (54) étant situé entre la couche de matériau (24) et la couche d'envers (12) dans la direction d'épaisseur (E), ou entre la couche de matériau (24) et la couche d'aspect (16).

6. Pièce de revêtement (10) selon l'une quelconque des revendications 1 à 5, dans laquelle la couche de matériau (24) présente une résistivité au repos en l'absence de ladite pression (P), la résistivité au repos étant comprise entre 40000 et 60000 ohm/carré, la couche de matériau (24) présentant localement une résistivité inférieure à la résistivité au repos là où ladite pression (P) est exercée.

7. Pièce de revêtement (10) selon l'une quelconque des revendications 1 à 6, dans laquelle la couche de matériau (24) comprend un matériau polymère (38), et des particules de carbone (40) dispersées dans le matériau polymère (38).

8. Pièce de revêtement (10) selon la revendication 7, dans laquelle :
- le matériau polymère (38) comprend du polyéthylène, et/ou
- les particules de carbone (40) ont un diamètre moyen compris entre 0,2 et 5,0 µm, et/ou
- les particules de carbone (40) représentent une fraction massique de la couche de matériau (24) comprise entre 10% et 30%.

9. Procédé de détection d'une pression (P) exercée sur une pièce de revêtement (10) selon l'une quelconque des revendications 1 à 8, le procédé comprenant les étapes suivantes :
- application de ladite pression (P) sur la couche d'aspect (16), et déformation (30) de la couche de matériau (24),
- variation de la résistance électrique de la couche de matériau (24), et
- mesure d'un paramètre représentatif d'une résistance électrique entre les deux électrodes (26A, 26B) pour détecter ladite variation.

## Patentansprüche

1. Verkleidungsteil (10) für Kraftfahrzeug, umfassend eine Rückseitenschicht (12), einen Drucksensor (14) und eine Aspektschicht (16), die aufeinanderfolgend entlang einer Stärkenrichtung (E) des Verkleidungsteils (10) gestapelt sind, der Drucksensor (14) umfassend eine Materialschicht (24), und mindestens zwei Elektroden (26A, 26B), die sich gegen die Materialschicht (24) erstrecken, wobei die Materialschicht (24) einen elektrischen Widerstand in elektrischem Kontakt mit den zwei Elektroden (26A, 26B) bildet, wobei der elektrische Widerstand abhängig von einer Verformung (30) der Materialschicht (24) infolge eines Drucks (P), der von einem Objekt oder einem Benutzer in der Stärkenrichtung (E) auf die Aspektschicht (16) ausgeübt wird, variabel ist,
- wobei die Materialschicht (24) eine Stärke (E1) aufweist, die zwischen 0,05 und 0,5 mm liegt,
- wobei die zwei Elektroden (26A, 26B) gegen eine gleiche Oberfläche (42) der Materialschicht (24) angeordnet sind, die sich auf einer gleichen Seite der Materialschicht entlang der Stärkenrichtung (E) befindet, und
- wobei jede der zwei Elektroden (26A, 26B) über diese Oberfläche (42) verteilt ist, ohne die andere der zwei Elektroden (26A, 26B) zu berühren.

2. Verkleidungsteil (10) nach Anspruch 1, wobei jede der zwei Elektroden (26A, 26B) einen Kollektor (44A, 44B) und eine Vielzahl von fadenförmigen Elementen (46A, 46B) umfasst, die parallel zueinander mit dem Kollektor (44A, 44B) verbunden sind, wobei sich die fadenförmigen Elemente (46A, 46B) von einem der zwei Elektroden (26A, 26B) mit den fadenförmigen Elementen (46A, 46B) der anderen von den zwei Elektroden (26A, 26B) auf der Oberfläche (42) abwechseln.

3. Verkleidungsteil (10) nach Anspruch 1 oder 2, wobei jede der zwei Elektroden (26A, 26B) Drähte aus Aluminium, Silber oder Kupfer umfasst.

4. Verkleidungsteil (10) nach Anspruch 1 oder 2, wobei jede der zwei Elektroden (26A, 26B) eine elektrisch leitende Farbe (52) umfasst.

5. Verkleidungsteil (10) nach Anspruch 4, wobei sich die Farbe (52) jeder der zwei Elektroden (26A, 26B) über die Materialschicht (24), die Rückseitenschicht (12) oder über einen Film (54) aus Kunststoff des Verkleidungsteils (10) erstreckt, wobei sich der Film (54) in der Stärkenrichtung (E) zwischen der Materialschicht (24) und der Rückseitenschicht (12) oder zwischen der Materialschicht (24) und der Aspektschicht (16) befindet.

6. Verkleidungsteil (10) nach einem der Ansprüche 1 bis 5, wobei die Materialschicht (24) bei Abwesenheit des Drucks (P) einen Ruhewiderstand aufweist, wobei der spezifische Widerstand im Ruhezustand zwischen 40.000 und 60.000 Ohm/Quadrat liegt, wobei die Materialschicht (24) dort, wo der Druck (P) ausgeübt wird, lokal einen spezifischen Widerstand aufweist, der geringer ist als der spezifische Widerstand im Ruhezustand.

7. Verkleidungsteil (10) nach einem der Ansprüche 1 bis 6, wobei die Materialschicht (24) ein Polymermaterial (38) und in dem Polymermaterial (38) dispergierte Kohlenstoffpartikel (40) umfasst.

8. Verkleidungsteil (10) nach Anspruch 7, wobei:
- das Polymermaterial (38) Polyethylen umfasst und/oder
- die Kohlenstoffpartikel (40) einen mittleren Durchmesser zwischen 0,2 und 5,0 µm aufweisen; und/oder
- die Kohlenstoffpartikel (40) einen Massenanteil der Materialschicht (24) zwischen 10 % und 30 % darstellen.

9. Verfahren zum Erfassen eines Drucks (P), der auf ein Verkleidungsteil (10) nach einem der Ansprüche 1 bis 8 ausgeübt wird, das Verfahren umfassend die folgenden Schritte:
- Ausüben des Drucks (P) auf die Aspektschicht (16) und Verformen (30) der Materialschicht (24),
- Verändern des elektrischen Widerstands der Materialschicht (24), und
- messen eines Parameters, der repräsentativ für einen elektrischen Widerstand zwischen den zwei Elektroden (26A, 26B) ist, um die Änderung zu erfassen.

## Claims

1. Lining part (10) for a motor vehicle comprising a backing layer (12), a pressure sensor (14) and an appearance layer (16) stacked successively in a thickness direction (E) of the lining part (10), the pressure sensor (14) comprising a material layer (24), and at least two electrodes (26A, 26B) extending against the material layer (24), characterized the material layer (24) forming an electrical resistance in electrical contact with the two electrodes (26A, 26B), the electrical resistance being variable as a function of a deformation (30) of the material layer (24) as a result of a pressure (P) exerted on the appearance layer (16) in the thickness direction (E) by an object or a user,
- the material layer (24) having a thickness (E1) of between 0.05 and 0.5 mm,
- the two electrodes (26A, 26B) being located against the same surface (42) of the material layer (24) located on the same side of the material layer according to the thickness direction (E), and
- each of the two electrodes (26A, 26B) being distributed over this surface (42) without touching the other of the two electrodes (26A, 26B).

2. Lining part (10) of claim 1, wherein each of the two electrodes (26A, 26B) comprises a collector (44A, 44B) and a plurality of wire elements (46A, 46B) connected in parallel with each other to the collector (44A, 44B), the wire elements (46A, 46B) of one of the two electrodes (26A, 26B) alternating with the wire elements (46A, 46B) of the other electrode (26A, 26B) on said surface (42).

3. Lining part (10) according to claim 1 or 2, wherein each of the two electrodes (26A, 26B) comprises aluminium, silver or copper wires.

4. Lining part (10) as claimed in claim 1 or 2, wherein each of the two electrodes (26A, 26B) comprises an electrically conductive paint (52).

5. Lining part (10) according to claim 4, wherein the paint (52) of each of the two electrodes (26A, 26B) extends over the material layer (24), the backing layer (12) or over a plastic film (54) of the lining part (10), the film (54) being located between the material layer (24) and the backing layer (12) in the thickness direction (E) or between the material layer (24) and the appearance layer (16).

6. Lining part (10) according to any one of claims 1 to 5, wherein the material layer (24) has a quiescent resistivity in the absence of said pressure (P), the quiescent resistivity being between 40,000 and 60,000 ohm/square, the material layer (24) locally having a lower resistivity than the quiescent resistivity where said pressure (P) is applied.

7. Lining part (10) according to any one of claims 1 to 6, wherein the material layer (24) comprises a polymeric material (38), and carbon particles (40) dispersed in the polymeric material (38).

8. Lining part (10) according to claim 7 or 2, wherein:
- the polymeric material (38) comprises polyethylene, and/or
- the carbon particles (40) have an average diameter between 0.2 and 5.0 µm, and/or
- the carbon particles (40) represent a mass fraction of the material layer (24) of between 10% and 30%.

9. Method of detecting a pressure (P) exerted on a lining part (10) according to any of claims 1 to 8, the method comprising the following steps:
- applying said pressure (P) to the appearance layer (16), and deforming (30) the material layer (24),
- change in electrical resistance of the material layer (24), and
- measuring a parameter representative of an electrical resistance between the two electrodes (26A, 26B) to detect said variation.
